(19) Europäisches Patentamt
European Patent Office
Office européen des brevets

(11) EP 1 058 248 A2

(12) **EUROPEAN PATENT APPLICATION**

(43) Date of publication:
**06.12.2000 Bulletin 2000/49**

(51) Int Cl.[7]: **G11B 7/24**, G11B 7/00, G11B 7/125

(21) Application number: **00112055.9**

(22) Date of filing: **02.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **04.06.1999 JP 15872399**

(71) Applicant: **Ricoh Company, Ltd.**
**Tokyo 143-8555 (JP)**

(72) Inventors:
- **Nakamura, Yuki, c/o Ricoh Company, Ltd.**
  **Tokyo 143 8555 (JP)**
- **Yamada, Katsuyuki, c/o Ricoh Company, Ltd.**
  **Tokyo 143 8555 (JP)**
- **Ogawa, Ippei, c/o Ricoh Company, Ltd.**
  **Tokyo 143 8555 (JP)**

(74) Representative: **Barz, Peter, Dr.**
**Patentanwalt**
**Kaiserplatz 2**
**80803 München (DE)**

(54) **Optical recording medium and recording method using the medium**

(57) An optical recording medium and recording method therewith are disclosed, in which the medium includes a recording layer that enables data recording on the optical recording medium through the phase change of the materials therein, and has a transition linear velocity x(m/sec) and a recording linear velocity y (m/sec), characterized by the relation

$$x/4(m/sec) < y(m/sec) < 4x(m/sec),$$

where the transition linear velocity x(m/sec) is x-coordinate of the inflection point of a graphical plot of percent reflectivity at groove portions in laser beam irradiated areas of the optical recording medium as a function of the linear velocity of laser beam irradiation, when the optical recording medium driven at a constant linear velocity (CLV) is irradiated using the laser beams of 780 nm ± 15 nm in wavelength with a power of 14 mW, lead through a pickup equipped with an objective lens of NA 0.5 at 780nm wavelength.

FIG. 5

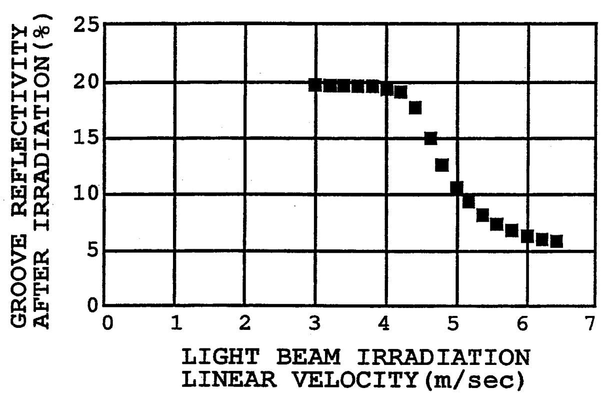


EP 1 058 248 A2

## Description

This patent specification relates to an optical recording medium, and more particularly, to the recording medium utilizing the phase-change induced by light beam irradiation, having improved read/write/rewrite capabilities which are useful in a variety of optical memory systems.

Optical recording media have recently come into wide use as viable data storage and archival device of large capacity.

Of the optical disk storage devices, a phase-change type recording medium is capable of implementing repeated read/write/erase operations by means of laser beam irradiation utilizing the phase transition between amorphous and crystalline states. For this type of the media in particular, overwrite operations can be carried out using a single light beam and a relatively simple optical readout system, which are especially useful in rewritable compact disks (or CD-RWs), for example, being advantageous over the magneto-optical memories that has difficulties in overwriting.

Phase-change materials for forming the recording medium, therefore, have attracted much attention recently to implement the aforementioned media capabilities. As an example of these materials, chalcogenide alloys are disclosed in U. S. Patent No. 3530441, such as Ge-Te, Ge-Te-Sn, Ge-Te-S, Ge-Se-S, Ge-Se-Sb, Ge-As-Se, In-Te, Se-Te and SeAs.

Also disclosed to improve stability and crystallization speed are Ge-Te alloy materials added with Au (Japanese Laid-Open Patent Application No. 61-219692), with Sn and Au (Japanese Laid-Open Patent Application No. 61-270190), or with Pd (Japanese Laid-Open Patent Application No. 62-19490). Further disclosed to improve write/readout characteristics for repeated operations are Ge-Te-Se-Sb and Ge-Te-Sb alloys with specified compositions (Japanese Laid-Open Patent Applications Nos. 62-73438 and 63-228433). These alloy materials, however, have not been satisfactory in various characteristics of the rewritable phase-change optical recording medium.

In particular, there have remained several problems of great importance yet to be solved and thereby achieve desirable characteristics. This may be achieved by attaining sufficient sensitivity during writing/erasing operations, preventing the decrease in erasure ratio caused by leftover portions during overwriting steps, and improving the durability of the media properties of written (or recorded) and non-written portions in the recording medium.

Another recording medium is proposed in Japanese Laid-Open Patent Application No. 63-251290, including a single recording layer in its crystalline state of substantially more than ternary composition. By "substantially more than ternary" is meant in the disclosure that the alloy system includes at least 90 atomic % of a ternary compound (e.g., $In_3SbTe_2$) in the recording layer. It is also stated that write/erasure characteristics are improved with the alloy composition. However, this composition still has shortcomings such as erasing ratios of relatively small magnitude and laser power yet to be reduced for write/erase operations.

Still another recording medium is proposed in Japanese Laid-Open Patent Application No. 1-277338, including $(Sb_a\ Te_{1-a})_{1-y}\ M_y$ with $0.4 \leq a \leq 0.7$ and $y \leq 0.2$, where M includes at least one additive which is selected from the group consisting Ag, Al, As, Au, Bi, Cu, Ga, Ge, In, Pb, Pt, Se, Si, Sn and Zn.

This alloy system is essentially composed of $Sb_2Te_3$ and several medium characteristics have been improved such as, high speed write/erase repeated operations by including a rather excess amount of Sb, and high speed erasure by the added M element. In addition, it is also stated that the erasing ratio is obtained to be relatively large with light beams in the continuous (or DC) mode. However, no description is found in that disclosure with respect to the erasing ratio for overwrite operations, and its recording sensitivity is not satisfactory. In this context, it may be noted that leftover portions have been found by the present inventors during erasing experiments on the alloy system.

In a similar manner, further recording media are proposed including respective recording layers, in which the one recording layer includes $(In_{1-x}\ Sb_x)_{1-y}\ M_y$ with $0.55 \leq x \leq 0.80$ and $0 \leq y \leq 0.20$, as disclosed in Japanese Laid-Open Patent Application No. 60-177446, where M includes at least one which is selected from the group consisting Au, Ag, Cu, Pd, Pt, Al, Si, Ge, Ga, Sn, Te, Se and Bi; the other recording layer includes an alloy GeTe-$Sb_2Te_3$-Sb(excess), as disclosed in Japanese Laid-Open Patent Application No. 63-228433. However, the recording media composed of the above alloy systems have not attained sufficient media characteristics such as the recording sensitivity and erasing ratio.

Further, there disclosed are optical recording media provided with respective recording layers including alloy systems such as, Ge-Te-Sb alloy added with N, described in Japanese Laid-Open Patent Application No. 4-163839; Te-Ge-Se alloy formed such that at least one of constituent elements thereof is incorporated as a nitride, described in Japanese Laid-Open Patent Application No. 4-52188; and Te-Ge-Se alloy adsorbed with N, described in Japanese Laid-Open Patent Application No. 4-52189. The optical recording media composed of these alloy systems, however, have not acquired satisfactory characteristics for the recording media.

In spite of numerous alloy material for forming recording layers of the optical recording media, as described hereinabove, there persist needs to solve several problems of great importance and to thereby attain desirable media characteristics such as sufficient sensitivity during writing/erasing operations by preventing the decrease in the erasure ratio caused by leftover portions during overwrite steps, also by improving durability of the structure and property of recorded and non-recorded portions in the recording medium.

As for the optical recording media, compact disks (CDs) have come into wide use as viable information storage media. Along with the rapid growth of the CDs, another type of compact disks, which are writable only once, or CD-R's, have been developed and recently placed into the market. However, since information data on the CD-R disk cannot be corrected because of its write-once feature mentioned just above, this disk has a shortcoming, in that the disk has to be abandoned when even one non-correctable error is inputted during the writing steps. Another type of the storage medium is therefore awaited for, that is capable of obviating the above noted disadvantage of the CD-R disk.

As an example of the storage media, there may be cited a rewritable compact disk utilizing magneto-optical materials. The magneto-optical disk, however, has drawbacks such as difficulty of overwriting and being incompatible with CD-ROM and CD-R disks. Therefore, a phase-change recording medium has recently been developed toward practical use intensively as one which features disk characteristics favorable to the compatibility with the above media, among others.

The research and development results disclosed so far are exemplified on the rewritable phase-change recording media and compact disks incorporating the recording media by Furuya, et al., Proceedings of the 4th Symposium on phase change optical recording (1992) 70; Kanno, et al., Proceedings of the 4th Symposium on phase change optical recording (1992) 76; Kawanishi, et al., Proceedings of the 4th Symposium on phase change optical recording (1992) 82; T. Handa, et al., Japanese Journal of Applied Physics, Vol. 32 (1993); Yoneda, et al., Proceedings of the 5th Symposium on phase change optical recording (1993) 9; and Tominaga, et al., Proceedings of the 5th Symposium on phase change optical recording (1993) 5.

These rewritable phase-change recording media, however, have not satisfied overall characteristics such as the compatibility with CD-ROMs and CD-Rs, record/erase capability, recording sensitivity, repeatability of rewriting and playback operations, and stability during storage. The above noted shortcomings in the media characteristics are considered primarily due to relatively low erasure ratios which are caused by the composition and/or structure of the recording materials previously employed for forming the phase-change recording media.

Accordingly, it is desirable to develop novel recording materials capable of yielding higher erasure ratios and being suitable for more sensitive write/erase capabilities, thereby to implement phase-change compact disks having improved rewritable characteristics.

In order to find improved material systems and thereby solve the above noted shortcomings, the present inventors have previously proposed several AgInSbTe recording materials. These materials are disclosed in Japanese Laid-Open Patent Applications Nos. 4-78031 and 4-123551, and also described by H. Iwasaki, et al., Japanese Journal of Applied Physics, Vol. 31 (1992) 461; Ide, et al., Proceedings of the 3rd Symposium on phase change optical recording (1991) 102; and H. Iwasaki, et al., Japanese Journal of Applied Physics, Vol. 32 (1993) 5241.

In addition, Part III of the Orange Book (Version 1.0) was published in October 1996 as the standards for the rewritable disk.

Other optical recording media have actively been pursued, including digital video disks (DVDs) and DVD-RAMs, which are considered to be leading recording media devices toward the twenty-first century. Along with such a trend, another demand has come about for the rewritable compact disks, such as the readout compatibility with the DVDs. In this context, it should be noted that CD-RW disks developed so far have attained relatively small reflectivity values and percentage modulations to thereby yield insufficient readout signal characteristics in the vicinity of 650 nm wavelength which is used for DVD disk readout.

In addition, while the Part III of the Orange Book (Version 1.0) defines recording(or writing) steps on CD-RW disks with 2× linear speeds (from about 2.4 m/sec to about 2.8 m/sec), it takes rather a long time for recording with such low velocities. Therefore, rewritable CD disks with higher recording velocities are desirable.

As described above, several phase-change recording disks have previously known having excellent disk characteristics. However, in order to realize more improved overall disk properties including, for example, the compatibility with the CD-R disks, also to acquire manufacturing technology useful enough to create new markets, further improvements are desirable in the disk characteristics.

Accordingly, it is an object of the present disclosure to provide an optical recording medium, having most, if not all, of the advantages and features of similar employed optical recording media, while eliminating many of the aforementioned disadvantages.

It is another object of the present disclosure to provide a reliable optical recording medium and a recording method therewith, which are capable of recording information data at recording linear velocities ranging from 1.2 m/sec to 11.2 m/sec.

The following brief description is a synopsis of only selected features and attributes of the present disclosure. A more complete description thereof is found below in the section entitled "Description of the Preferred Embodiments".

An optical recording medium disclosed herein includes a supporting substrate, and the following contiguous layers formed on the supporting substrate in the order recited, such as a first dielectric layer, a recording layer, a second dielectric layer, a metal/alloy layer, and an ultraviolet light curing resinous layer, in which the recording medium has a transition linear velocity x(m/sec) and a recording linear velocity y(m/sec), characterized by the relation

$x/4(m/sec) < y(m/sec) < 4x(m/sec)$.

In addition, the recording layer in the optical recording medium preferably includes Ag, In, Sb, Te, and at least one of N and O with a proportion in atom percent of α(Ag): β(In): γ(Sb): δ(Te): ε(at least one of N and O), with $0<\alpha\leq 6$, $3\leq\beta\leq 15$, $50\leq\gamma\leq 65$, $20\leq\delta\leq 35$, $0\leq\varepsilon\leq 5$ and $\alpha+\beta+\gamma+\delta+\varepsilon=100$.

Further, recording and rewriting data information into the optical recording medium may be carried out following the pulse width modulation method of electromagnetic wave irradiation, in which a sequence of recording and rewriting pulses are applied, including a multi-pulse portion which consists of pulse pairs repeated predetermined times at a predetermined duty ratio z so as to satisfy the relation:

$(4y-x)/120 < z < (6+4y-x)/16$.

A more complete appreciation of the present disclosure and many of the attendant advantages thereof will be readily obtained as the same becomes better understood by reference to the following detailed description when considered in connection with the accompanying drawing, wherein;

FIG. 1 is a cross sectional view illustrating an optical recording medium according to one embodiment disclosed herein;
FIG. 2 is a graph of uppermost linear velocity (m/sec) as a function of Te content;
FIG. 3 is a graph of groove reflectivity as a function of the thickness of the first protective layer (refractive index of 2.0) for the recording medium including the recording layer 25 nm thick, second protective layer 30 nm thick (refractive index of 2.0), and reflective/heat dissipating layer 140 nm thick;
FIG. 4A illustrates the pulse shape of input light beams of 3T width applied to the phase-change recording medium according to the embodiment disclosed herein;
FIG. 4B illustrates the shape of light beam pulses for n'=2 recording according to the embodiment disclosed herein;
FIG. 5 is a graph illustrating percent reflectivity at groove portions in light beam irradiated disk areas as a function of linear velocity of the light beam irradiation for the medium of Example 2;
FIG. 6 is a block diagram depicting the major units of the write/readout system disclosed herein; and
FIG. 7 illustrates the pulse shape of input light beams applied to the phase-change recording medium of Example 2, using a disk drive equipped with a pickup having an aperture of NA 0.5 at 780nm wavelength, with a Pe/Pw ratio of 0.5, Pb of 1 mW, a duty ratio Pw to Pe of 0.75, and a recording linear velocity of 11.2 m/sec at the bias power level.

Referring now to the drawings, there illustrated is an optical recording medium disclosed herein, including a supporting substrate 1, and the following layers formed contiguously on the supporting substrate in the order recited such as a first protective layer 2, a recording layer 3, a second protective layer 4, a reflective/heat dissipating layer 5, and an overcoat layer 6. Further, a printed layer 7 is preferably formed on the overcoat layer 6.

Suitable materials generally for use in the substrate 1 include glass, ceramics and resinous materials. Of these materials, resinous materials may preferably be employed for its satisfactory moldability and low costs. Specific examples of the resins include polycarbonate resins, acrylic resins, epoxy resins, polystyrene resins, acrylonitrilestyrene copolymeric resins, polyethylene resins, polypropylene resins, silicone resins, fluororesins, acrylonitrile-butadiene-styrene (ABS) resins and urethane resins. Among these resins, polycarbonate resins and acrylic resins are preferably used for their excellent moldability, optical properties and relatively low costs.

In addition, while the substrate 1 is usually of disc-shaped, it may also be of either card- or sheet-shaped.

Further, for use in the rewritable CD-RW disks utilizing phase-change recording materials disclosed herein, it is preferable for the substrate to satisfy the following specific conditions: The substrate is provided with grooves to help guide the laser beams during write/readout, and the width of the grooves is from 0.25 μm to 0.65 μm, more preferably from 0.30 μm to 0.60 μm; the depth thereof is from 150 A to 550 A, more preferably from 200 A to 450 A.

By realizing these substrate conditions together with the recording material and medium construction described earlier, a rewritable compact disk can be provided with excellent compatibility.

A quaternary alloy system including Ag, In, Sb and Te, as the major ingredient, has been found to be suitably used as a phase-change recording material for its excellence properties of sensitivity and speed in recording (or amorphization) and erasing operation steps, and in erasing ratio.

However, since the recording linear velocity of this alloy system varies with its composition to thereby result in an optimum value of the linear velocity, its composition has to be adjusted to realize linear velocities appropriate for the desired optical recording. There has been found thorough the examination by the present inventors that the recording linear velocity is highly correlated with Te composition in the AgInSbTe alloy.

FIG. 2 contains a graph of the recording linear velocity as a function of Te composition. These results have been obtained for a recording medium structure including a substrate 1.2 mm, first dielectric layer 100 nm, AgInSbTe layer 25 nm, second dielectric layer 30 nm, reflective/heat dissipating layer 140 nm, and overcoat layer 8 '10 µm. Data recordings onto the medium have been carried out with an optical pickup equipped with an objective lens of NA 0.5 at 780nm wavelength by the pulse width modulation (PWM) method. Pulse patterns are adopted according to Part III of the Orange Book, including a recording power 12 mW, erase power 12 mW, and bias power 6 mW.

Referring again to FIG. 2, the recording linear velocity is found highly correlated with Te composition as indicated by the currently obtained value of $R^2$ =0.9133.

From the above results and considering the experimental accuracy of ±1 atomic % presently estimated, the Te content is assumed to be 35 atomic % at most for the lowest linear velocity (0 m/sec). Also assumed from the results for forming optical recording medium are the Te contents (in atomic %) of 33, 30, 27 and 20, respectively, for attaining recording linear velocities (in m/sec) of 1.2~1.4 for the CD1×, 2.4~2.8 for the CD2×, 4.8~5.6 for the CD4× and 9.6~5.6 for the CD8× velocities.

In addition, the storage reliability of the AgInSbTe recording layer included in the phase-change recording medium is influenced by its composition. The amount of Ag higher than 6 atomic % causes considerable degradation in the overwrite shelf life, in that the recording medium cannot achieve satisfactory data recording after a prolonged storage such as, for example, several years after its production.

Also, an In amount larger than 15 atomic % considerably degrades the archival characteristics, while the amount smaller than 3 atomic % decreases recording sensitivity.

Further, the larger the Sb content, overwrite characteristics in repeated operations become more improved; while archival characteristics degrade in the Sb content higher than 65 atomic %.

The above noted degradation in the archival characteristics can be successfully obviated by further including N and/or O into the recording layer to thereby result in the stabilization of amorphous marks. These species N and O are known to be bonded Te and/or Sb from the results of IR spectral measurements.

The amount of N and O is preferably at most 5 atomic %. This amount larger than 5 atomic % results in an excessive nitration of the recording layer to cause difficulties in crystallization. As a result, an insufficient initialization and the decrease in the erasing ratio may result. By using Ar sputtering gaseous compositions which incorporates an adjusted amount of N gas of at most 10 mol%, desirable properties of the recording layer can be formed depending on the N composition, so as to attain appropriate disk characteristics such as linear velocity of rotation and disk layer structure.

In addition, the use of the above noted mixed Ar/N gaseous compositions can also yield improved record/erasure capabilities. The Ar/N gaseous compositions may be prepared either by mixing gaseous constituents in a predetermined mixing ratio prior to the introduction into a sputtering chamber, or by adjusting the proportion of respective incoming gaseous constituents such that a predetermined molar ratio be attained after being mixed in the sputtering chamber.

The amount of N in the recording layer is preferably at most 5 atomic % to achieve appropriate disk characteristics. In addition to the above noted overwrite characteristics in repeated operations, concrete examples of improved disk characteristics range over percentage modulation and storage life for the recorded marks (or amorphous marks), among others.

Although the details are yet to be clarified, the mechanism for these effects is considered as follows: The incorporation of N into the recording layer tends to increase the coarseness of the film structure caused by the decrease in layer density and the increase in minute defects. This results in the structural order of the layer be more relaxed than that prior to the N incorporation, which, in turn, tends to suppress the transition from the amorphous state to the crystalline state. As a result, the stability of amorphous marks increases, thereby improving the storage life for the marks.

A further effect of the N incorporation has been found, in that the transition linear velocity can be shifted toward its lower side. Accordingly, the transition linear velocity of the phase-change recording medium can be adjusted by changing an $N_2$/Ar ratio alone even using a single sputtering target.

The N species is preferably incorporated into the recording layer chemically bonded to at least one of Ag, In, Sb and Te. When the chemical bond is formed with Te, such as exemplified by Te-N and Sb-Te-N, for example, pronounced effects can be achieved, improving the number of repeated overwrite cycles.

Such chemical bonds may be analyzed by spectroscopic methods such as, for example, FT-IR and XPS. In FT-IR spectra, for example, the Te-N bond exhibits an absorption peak in the 500-600 $cm^{-1}$ spectral range, while the Sb-Te-N bond has an absorption peak in the 600-650 $cm^{-1}$ range.

In addition, it is effective for the recording layer to incorporate other elements or impurities to further improve media characteristics. For example, these additives are preferably selected from the group consisting of B, N, C, P and Si, which are disclosed in Japanese Laid-Open Patent Application No. 4-1488, and another group consisting of O, S, Se, Al, Ti, V, Mn, Fe, Co, Ni, Cu, Zn, Ga, Sn, Pd, Pt and Au.

The results on the composition of the recording layers disclosed herein have been obtained from the emission spectral analysis, while other methods may also be used for the analysis, such as x-ray microanalysis, Rutherford backscattering, Auger analysis, fluorescent x-ray spectroscopy and other similar methods. The results obtained from the latter methods may be used to compare with those from the emission spectral analysis. For the emission spectral analysis, its measurement error is generally known to be within 5%. In addition, the secondary ion mass-spectroscopy may also be effectively used as another method for the analysis.

The structure of the materials in the recording layer is adequately examined by the x-ray or electron beam diffraction method. The crystalline state, for example, can be distinguished from the amorphous state using the electron beam diffraction method. That is, the presence of diffraction spots and/or Debye rings on diffraction patterns is generally taken to be indicative of the crystalline state, while halo rings is of the amorphous state. In addition, the diameter of the crystallites may be calculated from the peak width at half maximum of the x-ray diffraction patterns according to the Scherrer's equation.

Further, spectral methods such as FT-IR and XPS are also useful for investigating bonding states of other materials such as oxides and nitrides, included in the recording medium.

The thickness of the recording layer preferably ranges from 10 nm to 100 nm, more preferably from 15 nm to 50 nm. When disk characteristics with respect to the initial jitter, overwrite and production yield are additionally considered, the recording layer preferably has a thickness ranging from 15 nm to 35 nm.

When the thickness thereof is smaller than 10 nm, the light absorbance by the layer decreases considerably. As a result, the layer cannot serve as recording layer. In contrast, the thickness larger 100 nm causes a difficulty in attaining rapid and homogeneous phase change in the recording layer material.

Examples of suitable materials for forming the first and second dielectric layers include metal oxides such as SiO, $SiO_2$, ZnO, $SnO_2$, $Al_2O_3$, $TiO_2$, $In_2O_3$, MgO and $ZrO_2$; nitrides such as $Si_3N_4$, AlN, TiN, BN and ZrN; sulfides such as ZnS, $In_2S_3$ and $TaS_4$; carbides such as SiC, TaC, $B_4C$, WC, TiC and ZrC; diamond-like carbon, and mixtures thereof.

These materials may be used individually or in combination. In addition, they may further include impurities, where relevant. While the dielectric layer may be formed to have a multilayered structure, their melting temperatures are preferably higher than that of the recording layer.

The first and second dielectric layers can be formed by, for example, vacuum evaporation, sputtering, plasma CVD, light assisted CVD, ion plating, or electron beam evaporation, or other similar methods. Of these, the sputtering method is preferably utilized for its excellent productivity and properties of those layers formed.

The thickness of the first dielectric layer influences considerably the reflectivity of light beams readout at 650 nm from DVDs.

Fig. 3 is a graph of groove reflectivity as a function of the thickness of the first protective layer (refractive index of 2.0) for the recording medium including the recording layer 25 nm thick, second protective layer 30 nm thick (refractive index of 2.0), and reflective/heat dissipating layer 140 nm thick.

It is shown in the graph that the thickness of the first dielectric layer preferably ranges from 65 nm to 130 nm, in order to obtain reflectivity values between 0.15 and 0.25 at the wavelengths of 780 nm and 650 nm, which have been standardized for the CD-RW disk readout. In addition, to obtain a reflectivity value large enough (approximately 18%) at 650 nm readout wavelength, the thickness of the first protective layer is preferably at most 110 nm. The thickness of the first dielectric layer is therefore preferably in the range between 80 nm to 110 nm in order to obtain sufficiently large reflectivity values at 780 nm read/write and the 650 nm readout wavelengths.

The thickness of the second dielectric layer preferably ranges from 15 nm to 45 nm, more preferably from 20 nm to 40 nm. When the thickness thereof is smaller than 15 nm, the layer cannot serve as heat resistant protective layer and its recording sensitivity is decreased. In contrast, the thickness larger than 45 nm causes several difficulties such as peeling-off at interlayer portions with relative ease and reducing the recording sensitivity in repeated recording operations at low linear velocities ranging from 1.2 m/sec to 5.6 m/sec.

Suitable materials for forming the reflective/heat dissipating layer include metals such as Al, Au, Ag and Cu and alloys thereof. Although this reflective/heat dissipating layer has not always to be provided, it is preferable to be formed to effectively dissipate excessive heat and to thereby reducing thermal load of the recording medium.

The reflective/heat dissipating layer may formed by, for example, vacuum evaporation, sputtering, plasma CVD, light assisted CVD, ion plating, electron beam evaporation, or other similar methods. The thickness of the reflective/heat dissipating layer preferably ranges from 70 nm to 180 nm, more preferably from 100 nm to 160 nm.

The overcoating layer 6 is preferably provided on top of the reflective/heat dissipating layer 5 to serve as oxidation inhibiting layer. This layer is generally formed with ultraviolet curing resinous materials which may be disposed by the spin coating method.

The thickness thereof preferably ranges from 7 μm to 15 μm. The layer thickness smaller than 7 μm may result in the increase of C1 errors (or block error rate) after affixing an overlying printed layer, while the thickness larger than 15 μm may cause the increase in the internal stress which considerably influences mechanical properties of the disks.

As electromagnetic radiation and energy beams useful for initializing, recording, reading-out, or erasing the recording medium disclosed herein, laser light, electron beams, x-ray beams, ultraviolet light, visible light, infrared light or microwave radiation may be utilized. Of these radiation and beams, light beams from a semiconductor laser device is preferably used for its smallness in size and compactness of the source device.

There illustrated in FIGS. 4A and 4B are the pulse shape of light beams applied to the phase-change recording medium and a write/readout system for the medium, according to the embodiment disclosed herein.

Referring to FIG. 6, this write/readout system according to the embodiment disclosed herein is configured to carry out write/readout operations of information data onto an optical recording medium 11, which follows: Rotating a recording medium including a phase-change optical recording disk by a driving mechanism 12 equipped with a spindle motor, activating a light source including a semiconductor laser device by a laser driving circuit used as a light source driving unit, focusing laser beams onto the optical recording medium 11 by an optical system (not shown), irradiating and thereby inducing the phase transition in the recording layer, and receiving light beams reflected from the recording medium 11 with an optical pickup 13, whereby the write/readout operations onto the optical recording medium are achieved.

In addition, referring again to FIG. 6, write/readout system also includes a recording power control circuit for adjusting test recording power as well as optimum recording power to be fed to the laser driving circuit, a recording control unit for controlling the recording power control circuit by control signals generated therefrom, and a recording signal amplitude monitoring circuit for receiving readout signals from the pickup and for generating control signals to be fed to the recording control unit.

As described above, the write/readout system according to the embodiment disclosed herein enables to carry out rewriting as well as the write/readout operations of information data onto an optical recording medium 1 by inducing the phase transition in the recording layer thorough the laser beam irradiation onto the optical recording medium. In addition, the write/readout system is also provided with a plurality of additional units such as, for example, one for modulating information data signals to be recorded by a modulation unit and the other for recording the signals by the write/readout pickup into the recording medium.

This recording unit including the optical pickup writes (or records) the information data in terms of the width of recorded "marks", which is generally referred to as the pulse width modulation (PWM) method. Also, data signals to be recorded are modulated through the modulation unit according to either the eight-to-four modulation (EFM) method or modified methods thereof, which are effectively utilized in the data recording for rewritable compact disks, for example.

In data recording into the phase-change recording medium, a "1" signal (i.e., 1 in binary) is made, in general, by forming amorphous portions (portions in the amorphous phase) in the recording layer of the recording medium, which is carried out, in turn, by elevating temperature of the recording layer portion higher than its melting point and subsequently lowering the temperature at a rate large enough for forming the amorphous phase.

Referring to FIG. 4B, the data recording can be achieved using a series of laser pulses exposed to the recording medium. Namely, the pulse fp raises the temperature of recording layer portion higher than its melting point to thereby form the front portion of the recorded mark, the pulse mp retains the thus raised temperature to thereby form the middle portion of the recorded mark, and the pulse po lowers the temperature of recording layer portion to thereby form the rear portion of the recorded mark.

The amount of light beam irradiation onto the recording medium varies with the linear velocity of the rotating recording medium to thereby change the speed of the above-mentioned raising and lowering the temperature of the recording layer portions. Therefore, the speeds of raising and subsequent lowering the temperature of recording layer portions can appropriately be adjusted by varying the linear velocity of the rotating recording medium.

Further, the information pertinent to recorded data by the PWM method is placed at the edge portions of the recorded marks. Therefore, in order to prevent either smearing at the boundary between recorded and non-recorded portions on the recording layer, or undue erasing caused by the crystallization of the amorphous recorded portions, it is important to prevent undesirable heating of the portions other than those to be recorded.

This smearing prevention or the distinction between the portions to be recorded and to be retained at lower ordinary temperature may be achieved by suppressing both undue heat generation at the recording layer portions and heat conduction in the recording layer.

The above distinction between the recorded and non-recorded portions may be achieved with these measures, to thereby facilitate to result excellent information data signals with reduced jitter values.

In the embodiment disclosed herein, a transition linear velocity x of the optical recording medium is defined as x-coordinate of the inflection point of a graphical plot of percent reflectivity at groove portions in laser beam irradiated areas of the recording medium as a function of the linear velocity of laser beam irradiation, when the recording medium driven at a constant linear velocity (CLV) is irradiated in a specified manner using the laser beams (780 nm ± 15 nm with a power of 14 mW through an objective lens of NA 0.5).

In the present embodiment, by adjusting both the transition linear velocity x(m/sec) and recording linear velocity y(m/sec) so as to satisfy the relation $x/4<y<4x$, excellent and stable record/rewrite characteristics can be achieved for information data signals on the phase-change recording medium.

These excellent characteristics can be attained for information data signals in the recording layer by irradiating the recording layer with electromagnetic wave according to the pulse width modulation (PWM) method so as to induce the phase transition in the recording layer. This PWM method preferably includes a sequence of recording and rewriting pulses, including a multi-pulse portion which consists of a plurality of pairs of a first pulse of higher power level Pw and a second pulse of lower power level Pw, that are repeated predetermined times at a predetermined duty ratio z. In addition, the duty ratio z is preferably chosen so as to satisfy the relation $(4y-x)/120<z<(6+4y-x)/16$, with x and y as defined earlier.

In addition, the optical recording medium disclosed herein preferably includes a substrate of disc-shaped, and the following contiguous layers formed on the substrate in the order recited, such as a first dielectric layer, a recording layer, a second dielectric layer, a metal/alloy layer, and an ultraviolet light curing resinous layer. In the embodiment, the first dielectric, recording, second dielectric, metal/alloy, ultraviolet light curing resinous layers each preferably has a thickness ranging from 65 nm to 130 nm, from 15 nm to 35 nm, from 15 nm to 45 nm, from 70 nm to 180 nm, from 7 μm to 15 μm, respectively.

Further, the recording layer, that enables information data recording on the optical recording medium through the phase change of the materials therein, essentially consists of Ag, In, Sb, Te, and at least one of N and O with a proportion in atom percent of α(Ag): β(In): γ(Sb): δ(Te): ε(at least one of N and O), with

$0<\alpha\leq 6$,
$3\leq\beta\leq 15$,
$50\leq\gamma\leq 65$,
$20\leq\delta\leq 35$, and
$0\leq\varepsilon\leq 5$, provided that $\alpha+\beta+\gamma+\delta+\varepsilon=100$,

and the optical recording medium preferably has a data recording capability at the recording linear velocity ranging from 1.2 m/sec to 11.2 m/sec.

Still further, record/rewrite operations on the recording layer of the rewritable optical recording medium can be satisfactorily carried out with a plurality of erasing and recording pulses, in which the ratio Pe/Pw of erasing power Pe to recording power Pw preferably ranges from 0.35 to 0.6.

In addition, these record/rewrite operations on the recording layer can also be satisfactory carried out with recording linear velocities for irradiating electromagnetic wave onto the medium of at least 2.4 m/sec with the duty ratio z described earlier, preferably ranging from 0.5 to 1.0.

Having generally described this invention, the following examples are provided further to illustrate preferred embodiments. This is intended to be illustrative but not to be limiting to the materials, devices or methods described herein.

## EXAMPLES

### EXAMPLES 1 to 11, and COMPARATIVE EXAMPLES 1 and 2

A plurality of phase-change recording media were each fabricated on a respective 1.2 millimeter thick polycarbonate substrate which was provided with pregrooved guide tracks of 0.5 micron width and 35 nanometers depth.

The following constituent layers were formed consecutively on the substrate in the order recited in a single sputtering apparatus. These constituent layers were a first dielectric layer, a recording layer, a second dielectric layer, and a reflective/heat dissipating layer. Thereafter, a hard coat layer was formed on the reflective/heat dissipating layer, using an ultraviolet curing resinous material disposed by spin coating, whereby a phase-change recording medium was fabricated.

For forming the first and second dielectric layers, the combination of ZnS and $SiO_2$ was used; and for forming the reflective/heat dissipating layer, an aluminum alloy was used.

Subsequently, a plurality of the phase-change recording medium of Examples 2 to 11, and Comparative Examples 1 and 2, were each fabricated, with the exception that respective constituent layers of each recording medium had different compositions and/or thickness as shown in Tables 1 and 2. Subsequently, the recording layers in the recording media were each rendered to crystallization by using an initialization apparatus equipped with a laser diode having a relatively large beam diameter.

The thus fabricated phase change recording medium of Example 2 was then subjected to measurements for determining a transition linear velocity. The results from the measurements are shown in FIG. 5 which includes a graph of percent reflectivity at groove portions in light beam irradiated disk areas as a function of the linear velocity of the light beam irradiation. The transition linear velocity is thereby obtained, as x-coordinate of the inflection point of the graph, to be 4.8 m/sec for recording medium of Example 2.

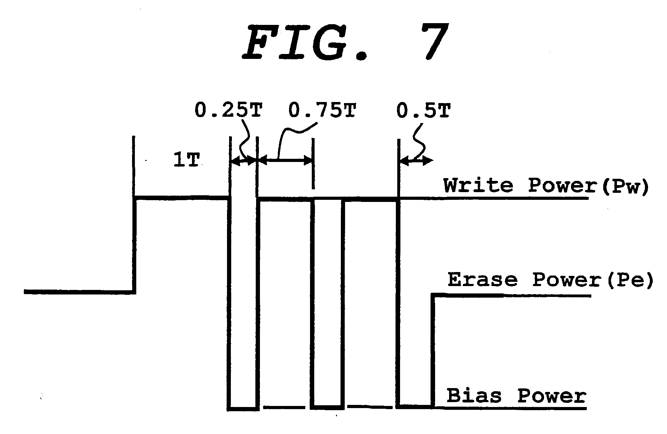

In addition, using a disk drive equipped with a pickup having an aperture of NA 0.5 at 780 nm wavelength, data recordings into the phase-change recording medium were carried out under pulse mode beam irradiation conditions illustrated in FIG. 7, such as a Pe/Pw ratio of 0.5, Pb of 1 mW, a duty ratio Pw to Pe of 0.75, and a bias power recording linear velocity of 11.2 m/sec. From the results of the data recording, the aforementioned C1 errors were found at most 80 within the Pw range of from 13 mW to 17 mw.

In the Tables 1 and 2, it may be noted that the tabulated C1 errors are obtained for the CD(2×)- and CD(8×)-data recordings which correspond, respectively, to recording linear velocities of from 2.4 m/sec to 2.8 m/sec and from 9.6 m/sec to 11.2 m/sec.

In addition, with respect to the recording medium which was formed with the structure of Comparative Example 1 in Tables 1 and 2, the signal quality was found considerably deteriorated after stored under high temperature and humidity conditions. This is considered due to a small thickness of its overcoat layer.

Further, the recording medium of Comparative Example 2 was found to have the signal amplitude as small as about 0.5, where the signal amplitude is given by 11T amplitude/reflectivity after being recorded, or $I_{11}/I_{top}$. As a result, it was occasionally difficult for the signals be played back with a CD-ROM drive.

TABLE 1

| Example | First protective layer | Recording layer | | | | | |
|---|---|---|---|---|---|---|---|
| | Thickness (nm) | Composition (atom %) | | | | | Thickness (nm) |
| | | Ag | In | Sb | Te | N | |
| 1 | 120 | 6 | 15 | 55 | 24 | 0 | 35 |
| 2 | 110 | 6 | 11 | 56 | 27 | 0 | 25 |
| 3 | 100 | 5 | 9 | 56 | 30 | 0 | 25 |
| 4 | 95 | 5 | 7 | 58 | 30 | 0 | 22 |
| 5 | 95 | 5 | 6 | 60 | 29 | 1 | 25 |
| 6 | 95 | 5 | 5 | 60 | 30 | 0 | 22 |
| 7 | 95 | 4 | 3 | 60 | 33 | 0 | 15 |
| 8 | 90 | 3 | 5 | 62 | 30 | 0 | 25 |
| 9 | 90 | 3 | 6 | 62 | 29 | 1 | 30 |
| 10 | 80 | 1 | 6 | 63 | 29 | 2 | 30 |
| 11 | 80 | 1 | 6 | 65 | 23 | 5 | 25 |
| Comparative Ex.1 | 95 | 5 | 6 | 60 | 29 | 1 | 25 |
| Comparative Ex.1 | 150 | 5 | 5 | 60 | 30 | 0 | 22 |

TABLE 2

| Example | Second protective layer | Reflective layer | Overcoat layer | C1 error (2× readout) | | Transition linear velocity (m/sec) |
|---|---|---|---|---|---|---|
| | Thickness (nm) | Thickness (nm) | Thickness (nm) | 2× record cps | 8× record cps | |
| 1 | 15 | 70 | 7~12 | 20 | 100 | 8.0 |
| 2 | 25 | 140 | 7~12 | 15 | 80 | 4.8 |
| 3 | 25 | 140 | 7~12 | 10 | 35 | 3.4 |
| 4 | 30 | 150 | 7~12 | 5 | 15 | 2.6 |
| 5 | 35 | 150 | 7~12 | 3 | 8 | 3.2 |
| 6 | 35 | 160 | 7~12 | 3 | 9 | 3.0 |
| 7 | 30 | 160 | 7~12 | 3 | 7 | 1.6 |
| 8 | 40 | 180 | 7~12 | 6 | 9 | 3.4 |
| 9 | 20 | 100 | 8~12 | 5 | 14 | 4.0 |
| 10 | 25 | 120 | 10~15 | 8 | 13 | 5.0 |
| 11 | 25 | 140 | 9~15 | 9 | 10 | 7.2 |

TABLE 2 (continued)

| Example | Second protective layer | Reflective layer | Overcoat layer | C1 error (2× readout) | | Transition linear velocity (m/sec) |
|---|---|---|---|---|---|---|
| | Thickness (nm) | Thickness (nm) | Thickness (nm) | 2× record cps | 8× record cps | |
| Comparative Ex.1 | 35 | 150 | 3~7 | 55 | 89 | 4.2 |
| Comparative Ex.1 | 35 | 160 | 7~12 | 3 | 9 | 3.2 |

It is apparent from the above description including the examples, by forming the optical recording medium disclosed herein, it becomes feasible to clearly define the range of recording linear velocities useful for the information data recording to thereby be capable of writing or rewriting stable data signals with excellent signal quality.

In addition, with present data recording utilizing the PWM method specified in this disclosure, writing and rewriting operations of stable data signals can be accomplished with excellent signal quality.

Obviously, numerous additional modifications and variations of the embodiments described above are possible in light of the above teachings. It is therefore to be understood that within the scope of the appended claims, the present invention may be practiced otherwise than as specifically described herein.

**Claims**

**1.** An optical recording medium comprising:

a supporting substrate of disc-typed; and
the following contiguous layers formed on said supporting substrate in the order recited, such as a first dielectric layer, a recording layer, a second dielectric layer, a metal/alloy layer, and an ultraviolet light curing resinous layer, wherein:
said recording medium has a transition linear velocity x(m/sec) and a recording linear velocity y(m/sec), characterized by the relation:
$x/4(m/sec) < y(m/sec) < 4x(m/sec)$,

where the transition linear velocity x(m/sec) is x-coordinate of the inflection point of a graphical plot of percent reflectivity at groove portions in laser beam irradiated areas of said optical recording medium as a function of linear velocity of laser beam irradiation, when said optical recording medium driven at a constant linear velocity (CLV) is irradiated using the laser beams of 780 nm ± 15 nm in wavelength with a power of 14 mW, lead through a pickup equipped with an objective lens of NA 0.5 at 780nm wavelength.

**2.** The optical recording medium according to claim 1,
wherein:
said recording layer, that enables information data recording on said optical recording medium through the phase change of the materials therein, essentially consists of Ag, In, Sb, Te, and at least one of N and O with a proportion in atom percent of $\alpha$(Ag): $\beta$(In): $\gamma$(Sb): $\delta$(Te): $\varepsilon$(at least one of N and O), with

$0<\alpha\leq6$,
$3\leq\beta\leq15$,
$50\leq\gamma\leq65$,
$20\leq\delta\leq35$, and
$0\leq\varepsilon\leq5$, provided that $\alpha+\beta+\gamma+\delta+\varepsilon=100$;

and wherein:
said optical recording medium has a data recording capability at recording linear velocity ranging from 1.2 m/sec to 11.2 m/sec.

**3.** The optical recording medium according to claim 1 or 2,

wherein:

said first dielectric, recording, second dielectric, metal/alloy, ultraviolet light curing resinous layers each has a thickness ranging from 65 nm to 130 nm, from 15 nm to 35 nm, from 15 nm to 45 nm, from 70 nm to 180 nm, from 7 μm to 15 μm, respectively.

**4.** The optical recording medium according to any one of claims 1-3, wherein:

said medium is capable of carrying out recording and rewriting information data according to a pulse width modulation (PWM) method of electromagnetic wave irradiation onto said medium to thereby induce the phase transition in said recording layer;
the PWM method uses a sequence of recording and rewriting operation pulses, including a multi-pulse portion which consists of a plurality of pairs of a first pulse of higher power level Pw and a second pulse of lower power level Pw, that are repeated predetermined times at a predetermined duty ratio z; and
the duty ratio z is chosen so as to satisfy the relation:

$(4y-x)/120 < z < (6+4y-x)/16$,

with x and y, defined in claim 1.

**5.** The optical recording medium according to claim 1,
wherein:

said first dielectric, recording, second dielectric, metal/alloy, ultraviolet light curing resinous layers each has a thickness ranging from 65 nm to 130 nm, from 15 nm to 35 nm, from 15 nm to 45 nm, from 70 nm to 180 nm, from 7 μm to 15 μm, respectively;
said recording layer, that enables information data recording on said optical recording medium through the phase change of the materials therein, essentially consists of Ag, In, Sb, Te, and at least one of N and O with a proportion in atom percent of α(Ag): β(In): γ(Sb): δ(Te): ε(at least one of N and O), with

$0<\alpha\leq 6$,
$3\leq\beta\leq 15$,
$50\leq\gamma\leq 65$,
$20\leq\delta\leq 35$, and
$0\leq\varepsilon\leq 5$, provided that $\alpha+\beta+\gamma+\delta+\varepsilon=100$;

and wherein:

said optical recording medium has a data recording capability at recording linear velocity ranging from 1.2 m/sec to 11.2 m/sec.

**6.** The optical recording medium according to claim 5,
wherein:

said medium is capable of carrying out recording and rewriting information data according to a pulse width modulation (PWM) method of electromagnetic wave irradiation onto said medium to thereby induce the phase transition in said recording layer;
the PWM method uses a sequence of recording and rewriting pulses, including a multi-pulse portion which consists of a plurality of pairs of a first pulse of higher power level Pw and a second pulse of lower power level Pw, that are repeated predetermined times at a predetermined duty ratio z; and
the duty ratio z is chosen so as to satisfy the relation:

$(4y-x)/120 < z < (6+4y-x)/16$,

with x and y, defined in claim 1.

**7.** A method for recording and rewriting information data onto an optical recording medium, comprising the steps of:

preparing said recording medium comprising a substrate of disc-shaped, and the following contiguous layers formed on said substrate in the order recited, such as a first dielectric layer, a recording layer, a second dielectric layer, a metal/alloy layer, and an ultraviolet light curing resinous layer, as claimed in any one of claims 1-6; and
irradiating electromagnetic wave onto said medium to thereby induce the phase transition in said recording layer, with a plurality of erasing and recording pulses,

wherein:
the ratio Pe/Pw of erasing power Pe to recording power Pw ranges from 0.35 to be 0.6.

**8.** The method according to claim 7, wherein:
recording linear velocity for irradiating electromagnetic wave onto said medium is at least 2.4 m/sec with a duty ratio z of the first pulse of higher power level Pw and the second pulse of lower power level Pw, specified in claim 4, ranges from 0.5 to 1.0.

FIG. 1

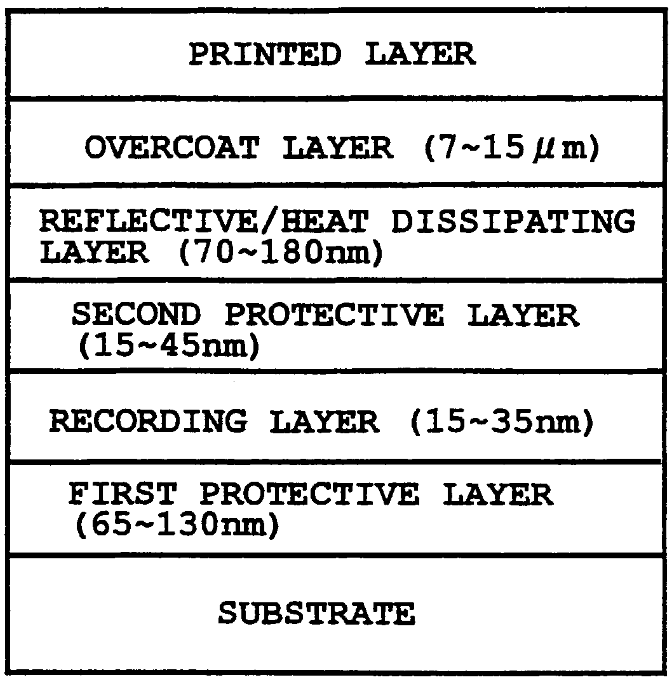
PRINTED LAYER
OVERCOAT LAYER (7~15 μm)
REFLECTIVE/HEAT DISSIPATING LAYER (70~180nm)
SECOND PROTECTIVE LAYER (15~45nm)
RECORDING LAYER (15~35nm)
FIRST PROTECTIVE LAYER (65~130nm)
SUBSTRATE

FIG. 2

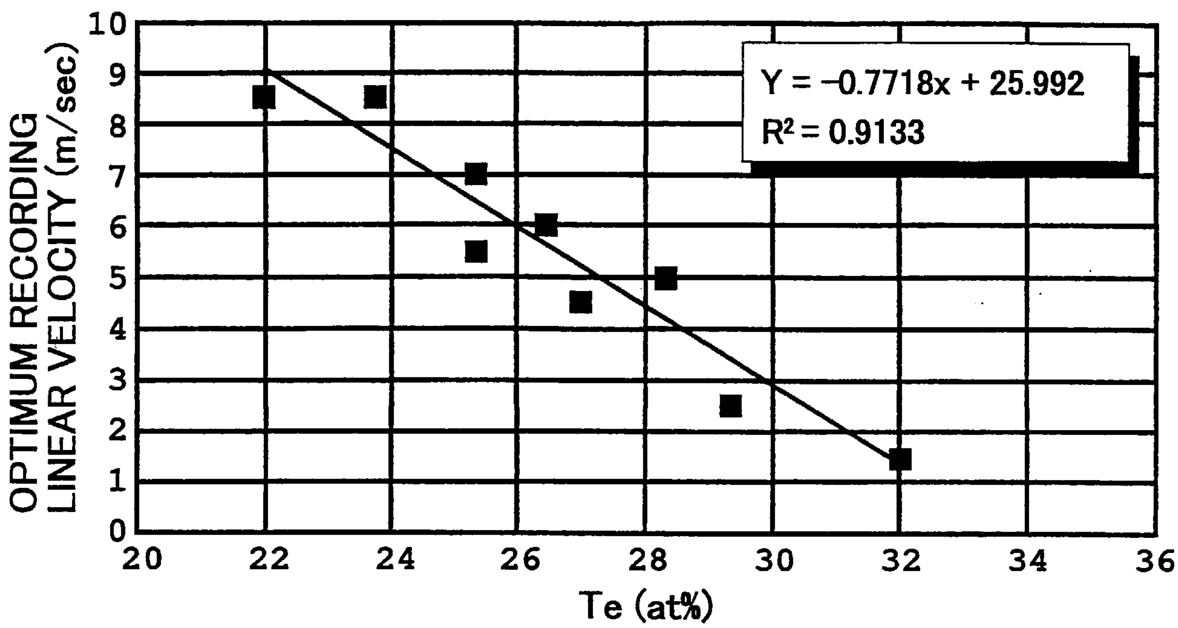
OPTIMUM RECORDING LINEAR VELOCITY (m/sec)
10
9
8
7
6
5
4
3
2
1
0
20
22
24
26
28
30
32
34
36
Te (at%)
Y = −0.7718x + 25.992
R² = 0.9133

FIG. 3

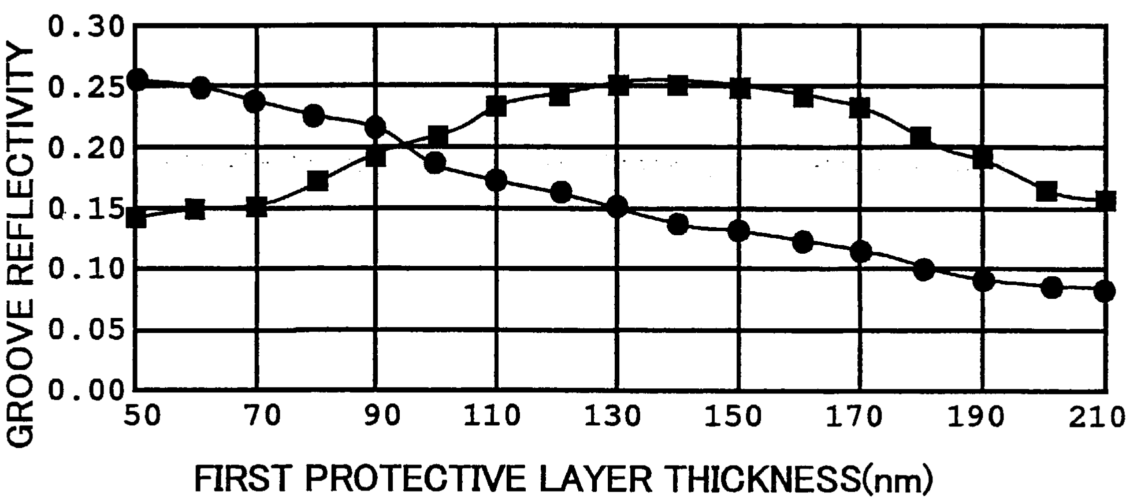
GROOVE REFLECTIVITY
0.30
0.25
0.20
0.15
0.10
0.05
0.00
50
70
90
110
130
150
170
190
210
FIRST PROTECTIVE LAYER THICKNESS(nm)

FIG. 4A

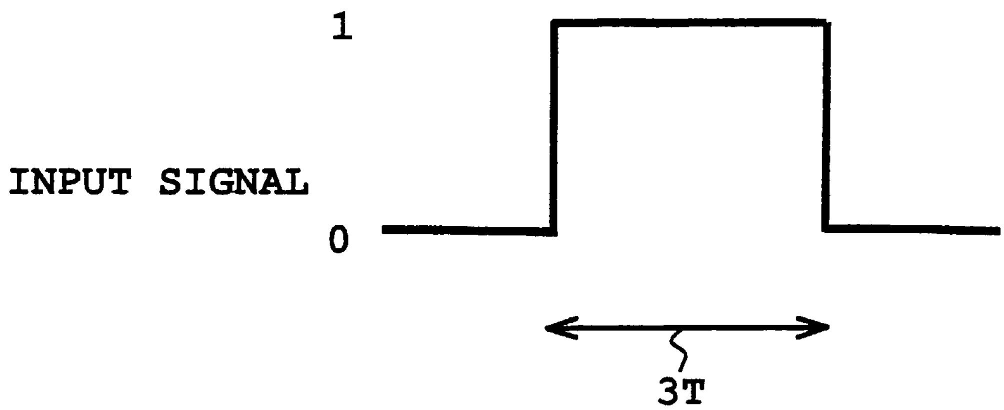


FIG. 4B

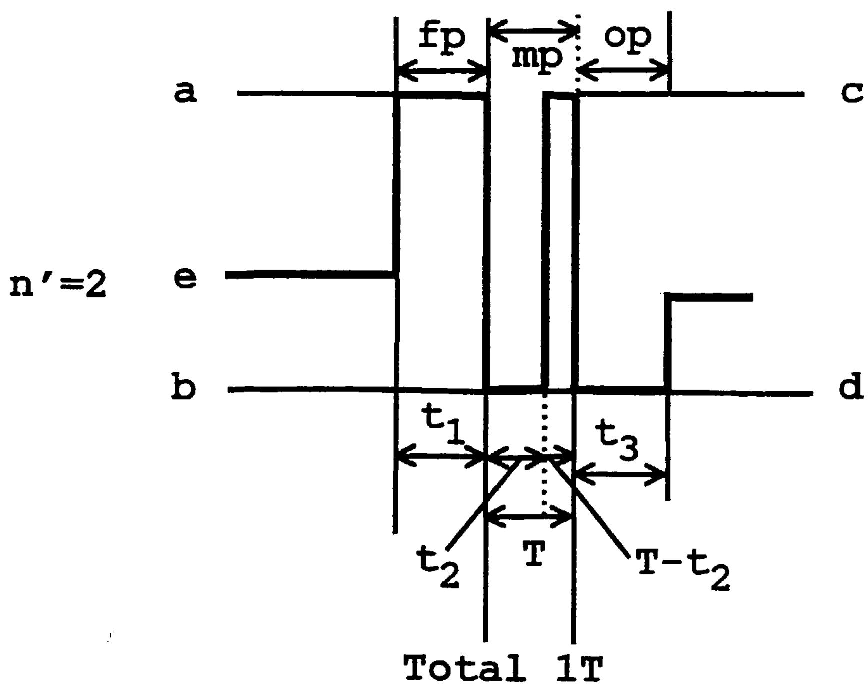

FIG. 5

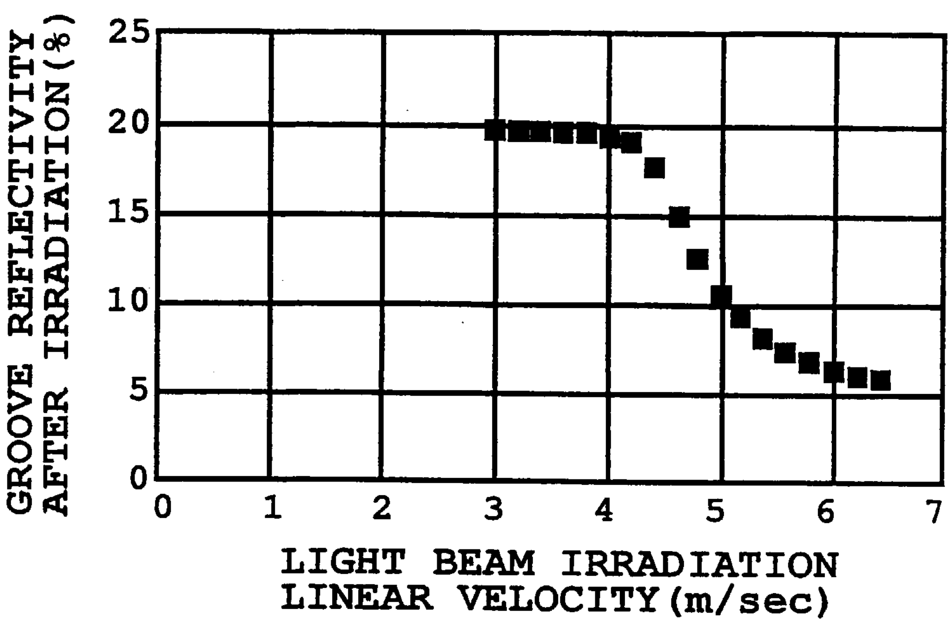
GROOVE REFLECTIVITY AFTER IRRADIATION(%)
25
20
15
10
5
0
0
1
2
3
4
5
6
7
LIGHT BEAM IRRADIATION LINEAR VELOCITY(m/sec)

FIG. 6

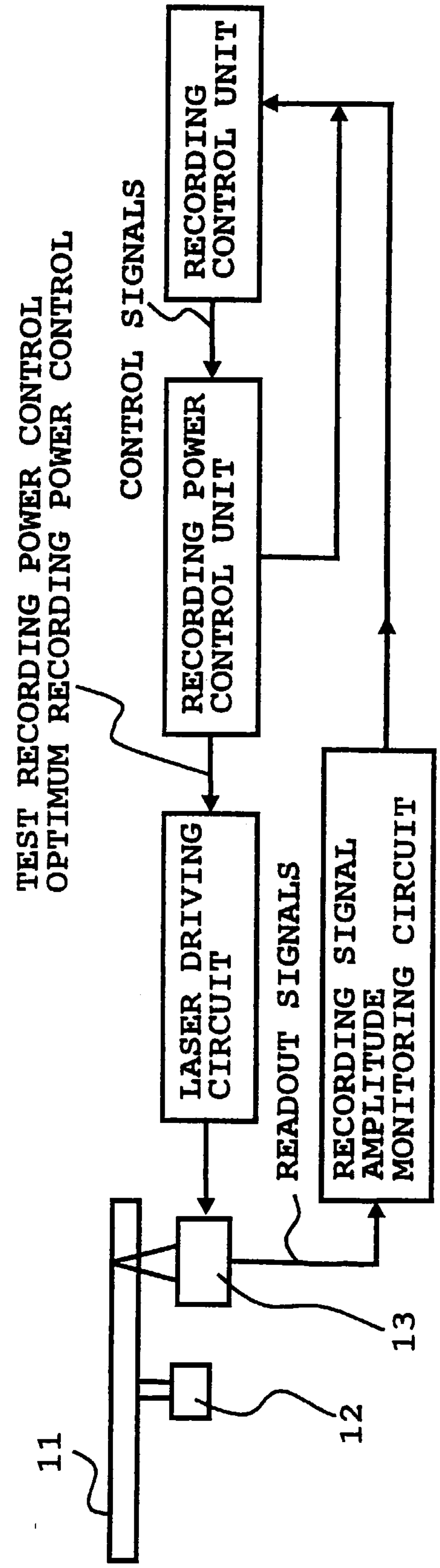
RECORDING CONTROL UNIT
CONTROL SIGNALS
RECORDING POWER CONTROL UNIT
TEST RECORDING POWER CONTROL
OPTIMUM RECORDING POWER CONTROL
LASER DRIVING CIRCUIT
READOUT SIGNALS
RECORDING SIGNAL AMPLITUDE MONITORING CIRCUIT
11
12
13

FIG. 7